# EUROPEAN PATENT APPLICATION

(11) **EP 4 661 114 A1**
(43) Date of publication of application: **10.12.2025**
(21) Application number: 24771153.4
(22) Date of filing: 12.03.2024
(51) Int. Cl.: H01M 4/62, H01M 4/13, H01M 10/42, H01M 10/052, H01M 4/02

(54) **SECONDARY BATTERY COATING COMPOSITION, AND SECONDARY BATTERY USING SAME**

(30) Priority: 14.03.2023 KR 20230033531; 19.12.2023 KR 20230186249
(71) Applicant: LG Energy Solution, Ltd., Seoul 07335 (KR)
(72) Inventor: LEE, Seong Kyu, Daejeon 34122 (KR); JUNG, Kyung Hwan, Daejeon 34122 (KR); JUNG, Byoung Hyo, Daejeon 34122 (KR); LEE, Suk Woo, Daejeon 34122 (KR)
(74) Representative: Plasseraud IP
(86) International application number: PCT/KR2024/003121
(87) International publication number: WO 2024/191154

(57) **Abstract**

A coating composition for a secondary battery according to the present invention is a composition for coating electrodes and/or separators, and includes a flame retardant, a dispersant, and an aqueous solvent. The flame retardant includes at least one of an inorganic flame retardant containing a hydroxyl group, a phosphorus-based flame retardant, a halogen-based flame retardant, and a melamine-based flame retardant.

## Description

### TECHNICAL FIELD

This application is based on and claims priority from Korean Patent Application Nos. 10-2023-0033531 and 10-2023-0186249, filed on March 14, 2023, and December 19, 2023, respectively, with the Korean Intellectual Property Office, the disclosures of which are incorporated herein in their entireties by reference.

The present invention relates to a positive electrode active material, a positive electrode slurry including the same, a method of preparing the same, and a positive electrode and a lithium secondary battery which include the same.

### BACKGROUND ART

With recent technological development and increased demand for mobile devices, the demand for batteries as an energy source has rapidly increased, and accordingly, various researches are being conducted on batteries that are capable of meeting various needs. For example, researches are being actively conducted on lithium secondary batteries that have high energy density as a power source for the devices and have excellent lifespan and cycle characteristics.

A lithium secondary battery includes a positive electrode containing a positive electrode active material capable of intercalating/deintercalating lithium ions, a negative electrode containing a negative electrode active material capable of intercalating/deintercalating lithium ions, a separator interposed between the positive electrode and the negative electrode, and an electrolyte. The positive electrode and the negative electrode have a structure in which an electrode active material layer is formed on one or both surfaces of an electrode current collector.

Meanwhile, in order to improve the safety of a secondary battery, improvements are being made to the characteristics of each of the positive electrode, negative electrode, electrolyte, and separator.

### DISCLOSURE OF THE INVENTION

### TECHNICAL PROBLEM

The present disclosure provides a secondary battery coating composition, which is capable of improving the dispersibility of a flame retardant in an aqueous solvent, and a secondary battery including a coating layer formed using the composition.

### TECHNICAL SOLUTION

An embodiment of the present disclosure provides a secondary battery coating composition including a flame retardant, a dispersant, and an aqueous solvent. The flame retardant includes at least one of an inorganic flame retardant containing a hydroxyl group, a phosphorus-based flame retardant, a halogen-based flame retardant, and a melamine-based flame retardant.

According to an embodiment of the present disclosure, the inorganic flame retardant contains one or more selected from the group consisting of boehmite, pseudoboehmite, aluminum hydroxide, and magnesium hydroxide. The inorganic flame retardant has an average particle size D50 ranging from about 0.1 µm to 5.0 µm.

According to an embodiment of the present disclosure, the dispersant is a compound containing one or more carboxyl groups. The dispersant contains one or more selected from the group consisting of citric acid, malic acid, oxalic acid, glutamic acid, aspartic acid, amino acid, malonic acid, and fatty acid.

According to an embodiment of the present disclosure, the dispersant and the flame retardant are contained in a weight ratio of about 1:2 to 1:150.

According to an embodiment of the present disclosure, the aqueous solvent may be water.

In the coating composition of an embodiment of the present disclosure, the solid content is about 10% by weight to 70% by weight.

The secondary battery coating composition according to an embodiment further includes a basic additive. The basic additive contains one or more selected from the group consisting of lithium carbonate, sodium carbonate, potassium carbonate, magnesium carbonate, calcium carbonate, ethylenediamine, diethylenetriamine, tris(2-aminoethyl)amine, vinylene carbonate, vinyl ethylene carbonate, fluoroethylene carbonate, methyl propargyl carbonate, and allyl methyl carbonate. The basic additive is contained in an amount of about 1 to 10 parts by weight based on 100 parts by weight of the secondary battery coating composition.

An embodiment of the present disclosure provides a secondary battery electrode includes a current collector, an electrode active material layer, and a coating layer. The electrode active material layer and the coating layer are disposed on the current collector, and the coating layer is formed by the above-described secondary battery coating composition. In the electrode according to an embodiment of the present disclosure, the coating layer has a thickness ranging from about 2 µm to 30 µm.

An embodiment of the present disclosure provides a lithium secondary battery including an electrode coated with the above-described secondary battery coating composition. An embodiment of the disclosure provides a sodium secondary battery including an electrode coated with the above-described secondary battery coating composition.

Another embodiment of the present disclosure provides a secondary battery separator including a porous polymer substrate and a coating layer. The coating layer is disposed on one surface of the porous polymer substrate, and the coating layer is formed by the above-described secondary battery coating composition.

Another embodiment of the present disclosure provides a method of manufacturing a secondary battery coating composition. The secondary battery coating composition contains a flame retardant, a dispersant, and an aqueous solvent, and the flame retardant includes at least one of an inorganic flame retardant containing a hydroxyl group, a phosphorus-based flame retardant, a halogen-based flame retardant, and a melamine-based flame retardant.

The inorganic flame retardant has an average particle size D50 ranging from about 0.1 µm to 5.0 µm.

The dispersant contains a compound containing one or more carboxyl groups.

### ADVANTAGEOUS EFFECTS

By making the secondary battery coating composition contain at least one of an inorganic flame retardant containing a hydroxyl group, a phosphorus-based flame retardant, a halogen-based flame retardant, and a melamine-based flame retardant, the secondary battery of the present disclosure is relatively improved in coatability and heat resistance since the flame retardant can be easily dispersed even in an aqueous solvent environment.

Accordingly, there is provided a secondary battery including a secondary battery coating composition that contains a flame retardant that can be easily dispersed even in an aqueous solvent environment.

### BRIEF DESCRIPTION OF THE DRAWINGS

FIG. 1 is an optical microscope image taken at 300x magnification after applying an electrode coating composition manufactured in Example 1 to a glass slide.
FIG. 2 is an optical microscope image taken at 300x magnification after applying an electrode coating composition manufactured in Example 2 to a glass slide.
FIG. 3 is an optical microscope image taken at 300x magnification after applying an electrode coating composition manufactured in Example 3 to a glass slide.
FIG. 4 is an optical microscope image taken at 300x magnification after applying an electrode coating composition manufactured in Example 4 to a glass slide.
FIG. 5 is an optical microscope image taken at 300x magnification after applying an electrode coating composition manufactured in Example 5 to a glass slide.
FIG. 6 is an optical microscope image taken at 300x magnification after applying an electrode coating composition manufactured in Example 6 to a glass slide.
FIG. 7 is an optical microscope image taken at 300x magnification after applying an electrode coating composition manufactured in Example 7 to a glass slide.
FIG. 8 is an optical microscope image taken at 300x magnification after applying an electrode coating composition manufactured in Comparative Example 2 to a glass slide.
FIG. 9 is an optical microscope image taken at 300x magnification after applying an electrode coating composition manufactured in Comparative Example 3 to a glass slide.
FIG. 10 is a graph showing battery capacity values depending on the number of cycles after operating lithium secondary batteries, which were manufactured in Example 3 and Comparative Example 1, respectively, at a temperature of 25°C.

In some of the accompanying drawings, corresponding components are given the same reference numerals. A person ordinarily skilled in the art will appreciate that the drawings illustrate elements simply and clearly and are not necessarily drawn to scale. For example, in order to aid understanding of various embodiments, the dimensions of some elements illustrated in the drawings may be exaggerated compared to other elements. In addition, elements that are useful or essential in commercially implementable embodiments but are known in the art may often be omitted so as not to impede the understanding of the spirit of the various embodiments of the present disclosure.

### MODE FOR CARRYING OUT THE INVENTION

Advantages and characteristics of the present disclosure and a method of achieving the advantages and characteristics will become clear by referring to embodiments described in detail below together with the accompanying drawings. However, the present disclosure is not limited to the embodiments to be described below but may be implemented in various different modes. These embodiments are provided merely to ensure that the present disclosure is completely disclosed and to fully inform a person ordinarily skilled in the art to which the present disclosure pertains of the scope of the present disclosure. The present disclosure is defined only by the claims. Like reference numerals indicate like components throughout the specification.

Unless otherwise defined, all terms (including technical and scientific terms) used herein may be used with meanings that can be commonly understood by a person ordinarily skilled in the art to which the present disclosure pertains. In addition, terms defined in commonly used dictionaries are not interpreted ideally or excessively unless clearly and specifically defined.

The terms used herein are for describing embodiments and are not intended to limit the present disclosure. As used herein, the singular also include the plural unless specifically stated in the phrase. As used herein, "comprises" and/or "comprising" does not exclude the presence or addition of one or more other components in addition to the mentioned components.

When it is described herein that a certain part includes a certain component, this means that, unless specifically stated otherwise, other components may be further included rather than being excluded.

The description "A and/or B" used herein means A, or B, or A and B.

Herein, "%" means weight percent unless explicitly stated otherwise.

Herein, the average particle size D50 may be defined as the particle size corresponding to 50% of the cumulative volume in the particle size distribution curve. The average particle size D50 may be measured, for example, using a laser diffraction method. The laser diffraction method is generally capable of measuring particle sizes ranging from a submicron region to several millimeters and capable of obtaining results with high reproducibility and high resolution.

As used herein, terms "about," "approximately," and "substantially" are used to mean a range of numerical values or degrees, or approximations thereof, considering inherent manufacturing and material tolerances, and are used to prevent an infringer from unfairly exploiting the described content where precise or absolute values are mentioned to aid understanding of the present disclosure.

In order to improve the safety of electrodes and separators, technologies to form a coating layer on the outer surface of each of an electrode, an active material layer, and a separator is being researched. By forming the coating layer on the outer surface of each of the electrode active material layer and the separator, it is possible to protect the electrode active material layer and the separator from the heat generated during the operation of the secondary battery, and improve the insulating property between electrodes.

Researches are being conducted on forming a coating layer of an electrode and a separator using a binder with an insulating property. However, the coating layer made of the binder has relatively weak heat resistance and suffers from a decrease in bonding strength under high temperature conditions during the operation of the battery, which results in deterioration of the safety of the battery.

In order to prevent the problem, the present disclosure provides a secondary battery in which the heat resistance of a coating layer is improved by adding a flame retardant to an electrode or separator coating composition.

When the flame retardant is not evenly dispersed in the electrode or separator coating composition which improves the heat resistance of the coating layer of the secondary battery, the flame retardant will precipitate to the bottom of the composition, which prevents the flame retardant from being uniformly distributed in the coating layer formed from the composition, thereby reducing the effect of improving the heat resistance of electrodes. In addition, in order to prevent the above-described problems including: a problem that the flame retardant is distributed intensively in the lower portion of the coating layer, the binder content located in the lower portion of the coating layer decreases, and thus the coating layer is easily detached from electrodes; and a problem that flame retardant particles aggregate together to form particles with large particle sizes whereby the viscosity of the composition increases and thus the thickness and/or surface of the coating layer is formed unevenly, the present disclosure provides a secondary battery to which a dispersant of a compound containing one or more carboxyl groups, which uniformly disperse a flame retardant in a secondary battery coating composition, is applied.

The present disclosure provides a secondary battery that is applied with an aqueous solvent and/or a binder in which the aqueous solvent is contained in an amount that allows the coating composition to have an appropriate viscosity, as a solvent for evenly dispersing the flame retardant in the secondary battery coating composition, and is relatively inexpensive and eco-friendly compared to a secondary battery to which an organic solvent is applied.

Hereinafter, the present disclosure will be described.

### Secondary Battery Coating Composition

The secondary battery coating composition according to the present disclosure contains a flame retardant, a dispersant, and an aqueous solvent, and the flame retardant includes at least one of an inorganic flame retardant containing a hydroxyl group, a phosphorus-based flame retardant, a halogen-based flame retardant, and a melamine-based flame retardant.

Hereinafter, each component of the secondary battery coating composition according to the present disclosure will be described.

### (1) Flame Retardant

The flame retardant is contained in the secondary battery coating composition to improve the heat resistance of a coating layer which will be described later. For example, the flame retardant includes the property of not softening or melting even at a high temperature of 900°C or higher. Therefore, when the flame retardant is contained in the coating layer, electrode insulation is maintained even at a very high temperature.

The flame retardant includes at least one of an inorganic flame retardant, a phosphorous flame retardant, a halogen-based flame retardant, and a melamine-based flame retardant.

The inorganic flame retardant decomposes by heat, releasing noncombustible gases such as water, carbon dioxide, sulfur dioxide, and hydrogen chloride, and causing an endothermic reaction. As a result, a combustible gas is diluted, access of oxygen is prevented, cooling is caused by the endothermic reaction, and generation of thermal decomposition products is reduced so that a flame retardant effect can be exhibited.

The inorganic flame retardant includes a compound containing a hydroxyl group. According to an embodiment, the inorganic flame retardant contains one or more selected from the group consisting of boehmite (AlO(OH)), pseudoboehmite (Al2O3·nH2O), alumina trihydrate (ATH) (Al(OH)3), and magnesium hydroxide (Mg(OH)2).

According to an embodiment, the phosphorus flame retardant exhibits a flame retardant effect by forming a protective layer with polymetaphosphoric acid generated through thermal decomposition, or by blocking oxygen by a carbon film generated by dehydration when polymetaphosphoric acid is produced. The phosphorus-based flame retardant contains one or more selected from the group consisting of phosphates such as red phosphorus and ammonium phosphate, phosphine oxide, phosphine oxide diols, phosphites, phosphonates, triaryl phosphate, alkyldiaryl phosphate, trialkyl phosphate, and resorcinaol bisdiphenyl phosphate (RDP) .

According to an embodiment, the halogen-based flame retardant may exhibit a flame retardant effect by substantially stabilizing radicals generated in the gas phase. The halogen-based flame retardant contains one or more selected from a group consisting of tribromo phenoxyethane, tetrabromobisphenol-A (TBBA), octabromodiphenyl ether (OBDPE), brominated epoxy oligomer, brominated polycarbonate oligomer, chlorinated paraffin, chlorinated polyethylene, and a cycloaliphatic chlorinated flame retardant.

According to an embodiment, the melamine-based flame retardant exhibits a flame retardant effect by promoting formation of carbide and absorbing energy through sublimation of melamine, and generating ammonia as a decomposition product while lowering the temperature of a combustion material, to dilute oxygen and combustion gas of a resin composition. For example, the melamine-based flame retardant contains one or more selected from the group consisting of melamine, melamine cyanurate, and melamine phosphate.

For example, the secondary battery coating composition according to the present disclosure contains an inorganic flame retardant. According to the present disclosure, the average particle size D50 of the inorganic flame retardant before dissolving in an aqueous solvent is about 0.1 µm to 5.0 µm, in an embodiment, about 0.1 µm to 4.0 µm, or about 0.3 µm to 1.0 µm. When the average particle size D50 of the inorganic flame retardant before dissolution satisfies the above-mentioned ranges, the occurrence of agglomeration of inorganic flame retardant particles in the composition is minimized so that a coating layer with a uniform thickness and surface is formed.

According to an embodiment, the flame retardant is contained in an amount of about 5 to 40 parts by weight, for example, about 15 to 30 parts by weight, or about 15 to 25 parts by weight, with respect to 100 parts by weight of the secondary battery coating composition. For example, when the content of boehmite satisfies the above-mentioned ranges, agglomeration of boehmite particles is minimized, thereby maintaining the viscosity of the secondary battery coating composition appropriately so that a coating layer with a uniform thickness and surface is formed.

### (2) Dispersant

The dispersant is used to improve the dispersibility of the flame retardant in the secondary battery coating composition of the present disclosure. According to an embodiment, the dispersant of the present disclosure improves the dispersibility of the flame retardant in an aqueous solvent environment.

The dispersant of the present disclosure includes a compound containing one or more carboxyl groups. When a compound containing one or more carboxyl groups is used as a dispersant in the secondary battery coating composition containing an aqueous solvent and a flame retardant according to an embodiment, the dispersibility of the flame retardant in the secondary battery coating composition and the coatability of the composition are relatively improved compared to the case to which the present disclosure is not applied. For example, when the flame retardant is an inorganic flame retardant containing a hydroxyl group, the hydrophilic group portions of a carboxylic acid compound are bonded with the hydroxyl groups on the surfaces of flame retardant particles. Therefore, the dispersibility of the flame retardant is improved by electrostatic repulsion between the carboxylic acid compounds located on the surfaces of respective flame retardant particles.

The dispersant of the present disclosure is a compound containing one or more carboxyl groups, in an embodiment, a compound containing about 2 to 5 carboxyl groups, or a compound containing about 2 to 4 carboxyl groups. When the number of carboxyl groups contained in the dispersant satisfies the above-mentioned ranges, the carboxylic acid compound is uniformly and densely disposed on the surfaces of the flame retardant particles, thereby relatively improving the dispersibility of the flame retardant.

The compound containing one or more carboxyl groups according to an embodiment of the disclosure contains at least one selected from the group consisting of citric acid, malic acid, oxalic acid, glutamic acid, aspartic acid, amino acid, malonic acid, and fatty acid. For example, the compound containing one or more carboxyl groups is citric acid. The citric acid has the advantages of high solubility in an aqueous solvent due to a large number of hydrophilic functional groups, excellent heat resistance due to a high melting point, and low price.

According to an embodiment, the dispersant is contained in an amount of about 0.1 to 10 parts by weight, for example, about 1 to 5 parts by weight, or about 1.9 to 2.5 parts by weight, with respect to 100 parts by weight of the secondary battery coating composition. When the content of the dispersant satisfies the above-mentioned ranges, the dispersibility of boehmite in the secondary battery coating composition containing an aqueous solvent is assured.

Meanwhile, the dispersant and the flame retardant of the present disclosure are contained in a weight ratio of about 1:2 to 1:150, for example, about 1:4 to 1:20, or about 1:5 to 1:10. When the weight ratios of the dispersant and the flame retardant satisfy the above-mentioned numerical ranges, the heat resistance of the secondary battery is improved by increasing the thickness of the coating layer by increasing the viscosity of the slurry while increasing the dispersibility of the flame retardant in an aqueous solvent to improve the coatability of the secondary battery coating composition.

### (3) Aqueous Solvent

In the present disclosure, the aqueous solvent is used to ensure the coatability of the secondary battery coating composition of the present disclosure by dissolving the flame retardant and the dispersant. The aqueous solvent used in the present disclosure has the advantages of low manufacturing cost, eco-friendliness, and harmlessness to the human body compared to organic solvents.

As the aqueous solvent, a solvent that has non-solvent properties for an electrode active material layer while being capable of dissolving the flame retardant and the dispersant at a predetermined level or higher is used. Water is used as the aqueous solvent according to an embodiment. Alternatively, the aqueous solvent further contains alcohol compounds such as ethanol and methanol in addition to water.

According to an embodiment, in consideration of the coatability of the coating composition, the aqueous solvent is contained in an amount that allows the composition to have an appropriate viscosity. According to an embodiment, the aqueous solvent is contained in an amount of about 20 to 90 parts by weight, for example, about 23 to 80 parts by weight, or about 65 to 78 parts by weight, with respect to 100 parts by weight of the coating composition. Meanwhile, the secondary battery coating composition according to an embodiment of the present disclosure has a solid content of about 10% to 80% by weight, for example, about 20% to 77% by weight, or about 22% to 35% by weight. When the solid content satisfies the above-mentioned ranges, the secondary battery coating composition has a viscosity suitable for forming a coating layer using the composition while minimizing agglomeration of flame retardant particles.

### (4) Binder

The secondary battery coating composition according to an embodiment of the present disclosure further includes a binder. The binder according to an embodiment further improves the adhesion between a coating layer and a current collector and/or an electrode active material layer.

The binder according to an embodiment contains a compound that is not easily dissolved in an electrolyte of a secondary battery. The binder is a polymer binder, and for example, aqueous or non-aqueous polymers containing a single substance or a mixture of two or more selected from the group consisting of polyvinylidene fluoride (PVdF), polyvinylidene fluoride-hexafluoropropylene, polyvinylpyrrolidone, polyacrylonitrile, polyacrylimide, polyvinylidene fluoride-trichloroethylene, polyvinylidene fluoride-chlorotrifluoroethylene (PVdF-CTFE), polymethyl methacrylate, polyvinylacetate, ethylene-co-vinyl acetate copolymer, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxy methyl cellulose (CMC), styrene butadiene rubber (SBR), acrylonitrile styrene butadiene copolymer, and polyimide are used. Among these, the carboxyl methyl cellulose and/or the styrene butadiene rubber is easily dissolved in an aqueous solvent and increases binding force, thereby relatively reducing the amount of binder.

According to an embodiment, the binder is contained in an amount of about 0.1 to 20 parts by weight, for example, about 0.1 to 10 parts by weight, or about 1 to 3 parts by weight, with respect to 100 parts by weight of the secondary battery coating composition of the present disclosure. When the content of the binder satisfies the above-mentioned ranges, the adhesion between the coating layer and the electrode is relatively improved.

### (5) Basic Additive

The secondary battery coating composition according to an embodiment further contains a basic additive.

For example, the basic additive neutralizes an acidic dispersant in the composition of the present disclosure, that is, a compound containing one or more of the above-mentioned carboxyl groups. Alternatively, when the basic additive is further contained in the electrode or separator coating composition of the present disclosure, side reactions due to acids are suppressed through acid-base neutralization reaction in the composition.

According to an embodiment, the basic additive contains one or more selected from the group consisting of lithium carbonate (Li2CO3), sodium carbonate (Na2CO3), potassium carbonate (K2CO3), magnesium carbonate (MgCO3), calcium carbonate (CaCO3), ethylenediamine (EDA), diethylenetriamine (DETA), tris(2-aminoethyl)amine (TAEA), vinylene carbonate (VC), vinylethylene carbonate (VEC), fluoroethylene carbonate (FEC), methyl propargyl carbonate (MPC), and allyl methyl carbonate (AMC).

According to an embodiment, the basic additive is contained in an amount of about 0.1 to 10 parts by weight, for example, about 0.1 to 5 parts by weight, or about 0.2 to 2.3 parts by weight, with respect to 100 parts by weight of the secondary battery coating composition. When the content of the basic additive satisfies the above-mentioned numerical ranges, the dispersant contained in the composition is sufficiently neutralized.

Meanwhile, the secondary battery coating composition according to an embodiment of the present disclosure is manufactured by adding and mixing a flame retardant and a dispersant in an aqueous solvent, and then performing a dispersion process.

For example, respective components of the composition are mixed by adding and mixing the flame retardant and the dispersant in the aqueous solvent. At this time, the mixing is performed using a mixing device such as a homo mixer.

Alternatively, the composition that has undergone the mixing process is milled and dispersed. The milling is performed using, for example, a ball mill, a bead mill, or a basket mill. Meanwhile, the degree of dispersion of the composition is controlled by adjusting milling conditions such as the number of times the composition is passed through a ball mill, a bead mill, or a basket mill (hereinafter, referred to as "the number of passes"), and a rotor speed.

Meanwhile, the average particle size D50 of the solid particles in the composition according to an embodiment of the present disclosure is about 0.1 µm to 10 µm, for example, about 0.3 µm to 3 µm, or about 0.3 µm to 1 µm. Here, the solid particles contain at least one of the flame retardant and the dispersant. For example, the solid particles have a form in which flame retardant particles are bonded to each other, or in a form in which the dispersant is bonded to flame retardant particles. Alternatively, the solid particles have a form in which the dispersant and the binder are bonded to flame retardant particles. When the particle size of the solid particles in the composition satisfies the above-mentioned ranges, the dispersibility of the flame retardant particles in the composition is improved, and the coatability and adhesiveness of the coating layer are relatively improved. Meanwhile, the degree of dispersion of solid particles in the composition according to an embodiment is controlled by adjusting, for example, the solid content in the composition, the type and content of the dispersant, and/or dispersion process conditions.

The viscosity of the secondary battery coating composition according to an embodiment is about 10 cP to 16,000 cP, for example, about 20 cP to 4,000 cP, or about 30 cP to 600 cP. When the viscosity of the composition satisfies the above-mentioned numerical ranges, the coating layer is formed at an appropriate level of thickness, thereby ensuring the heat resistance of the battery while minimizing a decrease in battery life due to an increase in electrode resistance.

Meanwhile, the secondary battery coating composition according to an embodiment of the present disclosure controls the content ratio of the flame retardant and the dispersant, thereby making it easy to control the thickness of the coating layer by adjusting the viscosity of the composition while ensuring the dispersibility of the flame retardant and the coatability of the composition. Therefore, when manufacturing a secondary battery in which heat resistance is to be ensured, it is easy to manufacture a thick coating layer by adjusting the viscosity of the composition.

According to an embodiment, the secondary battery coating composition of the present disclosure is used to form a coating layer on an electrode. For example, an electrode coating layer is formed by applying the above-described secondary battery coating composition onto a current collector and/or an electrode active material layer and then drying the composition.

According to an embodiment, the composition of the present disclosure is also used to form a coating layer on a separator. For example, a separator coating layer is formed by applying the composition of the present disclosure described above on a separator coated with an aqueous binder slurry and then drying the composition.

### Electrode

An electrode according to an embodiment of the present disclosure will be described. An electrode of the present disclosure includes a current collector, an electrode active material layer, and a coating layer. The electrode active material layer and the coating layer are disposed on the current collector, and the coating layer is formed by the above-described secondary battery coating composition. In this case, the composition for secondary battery coating is the same as described above.

For example, the current collector is conductive without causing a chemical change in the battery. Alternatively, as the current collector, copper, stainless steel, aluminum, nickel, titanium, calcined carbon, or aluminum or stainless steel surface-treated with, for example, carbon, nickel, titanium, or silver is used.

As the electrode active material layer in the secondary battery of the present disclosure, a positive electrode active material layer containing a positive electrode active material or a negative electrode active material layer containing a negative electrode active material is used. As the positive electrode active material, for example, a lithium cobalt-based oxide, a lithium nickel-based oxide, a lithium manganese-based oxide, a lithium iron phosphate, a lithium nickel manganese cobalt-based oxide, or a combination thereof is used. Alternatively, as the positive electrode active material, for example, LiCoO2, LiNiO2, LiMn2O4, LiCoPO4, LiFePO4, and LiNiaMnbCocO2 (Here, 0 < a, b, c < 1) are used. As the negative electrode active material, for example, one type or two or more types of negative electrode active materials selected from the group consisting natural graphite, artificial graphite, and carbonaceous materials; lithium-containing titanium complex oxide (LTO) and metals (Me) that are Si, Sn, Li, Zn, Mg, Cd, Ce, Ni or Fe; alloys composed of the metals (Me); oxides of the metals (Me) (MeOx); and composites of the metals (Me) and carbon.

The electrode active material layer according to an embodiment further includes a conductive material and a binder in addition to the active materials such as the positive electrode active material and the negative electrode active material.

The conductive material according to an embodiment is one that has conductivity without causing a chemical change in the battery, and, for example, graphite; carbon black such as acetylene black, Ketjen black, channel black, furnace black, lamp black, and thermal black; conductive fibers such as carbon fiber and metal fiber; metal powders such as carbon fluoride powder, aluminum powder, and nickel powder; conductive whiskers such as zinc oxide whisker and potassium titanate whisker; conductive metal oxides such as titanium oxide; or conductive materials such as polyphenylene derivatives are used as the conductive material. Examples of commercially available conductive materials include various acetylene black products (available from Chevron Chemical Company, Denka Singapore Private Limited, and Gulf Oil company), Ketjenblack EC series (available from Armak Company), Vulcan XC-72 (available from Cabot Company), and Super P (available from Timcal Company).

The binder is a component that assists the bonding between the active material and the conductive material and the bonding to the current collector, and according to an embodiment, the binder is added in an amount of about 1% to 30% by weight with respect to the total weight of the mixture containing the positive electrode active material. Examples of such a binder include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butylene rubber, fluorine rubber, and various copolymers thereof.

Meanwhile, the coating layer according to an embodiment of the present disclosure is formed by applying the above-described secondary battery coating composition onto the current collector and then drying the coating composition. For example, the coating layer is formed on an uncoated area where the electrode active material layer is not formed on the current collector. In this case, the coating layer is formed to partially overlap an end of the electrode active material layer. The coating layer is formed to a certain thickness on the current collector and the electrode active material layer. In this case, the thickness of the coating layer is about 2 µm to 30 µm, for example about 2 µm to 20 µm, or about 5 µm to 13 µm. When the thickness of the coating layer satisfies the above-mentioned ranges, the adhesiveness of the coating layer to the current collector and/or the electrode active material layer is relatively high.

The coating layer according to an embodiment of the present disclosure has relatively excellent coatability compared to conventional coating layers. For example, the coating layer is relatively uniform in thickness and/or surface. Alternatively, flame retardant particles are uniformly dispersed on the coating layer. As a result, the heat resistance and life characteristics of the secondary battery are relatively increased.

### Secondary Battery

A lithium secondary battery according to an embodiment of the present disclosure will be described.

The lithium secondary battery of the present disclosure is a lithium secondary battery including the above-described electrodes. In this case, the electrodes are as previously described. For example, an electrode is an anode and/or a cathode. The lithium secondary battery according to an embodiment of the present disclosure includes a positive electrode, a negative electrode, a separator interposed between the positive and negative electrodes, and an electrolyte.

The separator according to an embodiment of the present disclosure has a low resistance to the transfer of ions in the electrolyte and relatively excellent electrolyte impregnation ability. For example, a porous polymer film made of a polyolefin-based polymer such as ethylene homopolymer, propylene homopolymer, ethylene/butene copolymer, ethylene/hexene copolymer, or ethylene/methacrylate copolymer is used alone or in a laminated structure of two or more layers. Alternatively, a porous non-woven fabric, for example, a non-woven fabric made of, for example, glass fiber with a high melting point or polyethylene terephthalate fiber, may be used.

The electrolyte according to an embodiment contains an organic solvent and a lithium salt.

As the organic solvent according to an embodiment, a solvent that is capable of serving as a medium through which ions involved in the electrochemical reaction of the battery can move is used. As the organic solvent, for example, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; or a carbonate-based solvent such as dimethyl carbonate (DMC), diethyl carbonate (DEC), ethyl methyl carbonate (EMC), ethylene carbonate (EC), or propylene carbonate (PC) may be used. For example, the carbonate-based solvent may be used, and a mixture of a cyclic carbonate with high ionic conductivity and high dielectric constant capable of improving the charge/discharge performance of the battery (e.g., ethylene carbonate or propylene carbonate), and a linear carbonate-based compound with low viscosity (e.g., ethylmethyl carbonate, dimethyl carbonate, or diethyl carbonate) may be used.

As the lithium salt according to an embodiment, for example, LiPF6, LiClO4, LiAsF6, LiBF4, LiSbF6, LiAlO4, LiAlCl4, LiCF3SO3, LiC4F9SO3, LiN(C2F5SO3)2, LiN(C2F5SO2)2, LiN(CF)3SO2)2. LiCl, LiI, or LiB(C2O4)2 is used. For example, the lithium salt is contained in the electrolyte at a concentration of about 0.6 mol% to 2 mol%.

In addition to the electrolyte components, the electrolyte according to an embodiment of the present disclosure may further include, for example, least one additive such as pyridine, triethylphosphite, triethanolamine, cyclic ether, ethylene diamine, n-glyme, hexanoic acid triamide, a nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride for the purpose of, for example, improving battery life characteristics, suppressing battery capacity reduction, and improving battery discharge capacity.

The lithium secondary battery according to an embodiment of the present disclosure is manufactured by placing a separator between a positive electrode and a negative electrode to form an electrode assembly, introducing the electrode assembly into a cylindrical or prismatic battery case, and then injecting electrolyte into the battery case. Alternatively, the lithium secondary battery is manufactured by stacking the electrode assembly, then impregnating the electrode with the electrolyte, and putting and sealing the product thus obtained in a pouch.

When manufacturing the lithium secondary battery according to an embodiment of the present disclosure, the electrode assembly is dried to remove one or more organic solvents selected from the group consisting of N-methyl-2-pyrrolidone (NMP), acetone, ethanol, propylene carbonate, ethylmethyl carbonate, ethylene carbonate, and dimethyl carbonate and used when manufacturing the positive electrode. Alternatively, when an electrolyte with the same composition as the organic solvent is used when manufacturing the positive electrode, the process of drying the electrode assembly is omitted.

Meanwhile, in the foregoing description, the coating composition has been described in relation to a lithium secondary battery, but the coating composition according to an embodiment of the present disclosure may be similarly applicable to a sodium secondary battery using sodium instead of lithium. For example, the coating composition of the present disclosure may be similarly applicable to a sodium ion secondary battery manufactured using a material containing sodium rather than lithium as the positive electrode active material.

In addition, unlike the lithium secondary battery described above, the lithium secondary battery according to another embodiment of the present disclosure is an all-solid-state battery.

The battery case according to an embodiment of the present disclosure may be easily appliable depending on the external shape according to the use of the battery, and may be manufactured in, for example, a cylindrical shape using a can, a square shape, a pouch shape, or a coin shape.

The lithium secondary battery according to an embodiment of the present invention stably exhibits relatively improved discharge capacity, relatively improved output characteristics, and a relatively improved excellent capacity retention rate, so that the lithium secondary battery is useful in the field of, for example, portable devices such as mobile phones, notebook computers, digital cameras, and the like, energy storage systems (ESSs), and electric vehicles such as hybrid electric vehicles (HEVs).

Hereinafter, the present disclosure will be described in more detail with examples. However, the following examples are only examples to aid understanding of the present disclosure and do not limit the scope of the present disclosure. It is obvious to those skilled in the art that various changes and modifications are possible within the scope and technical spirit of the present description, and it is natural that such changes and modifications fall within the scope of the appended claims.

In addition, in the examples and comparative examples described below, the coating composition of the present disclosure is described as being applied to the electrodes of a secondary battery, but as described above, the coating composition of the present disclosure may be applicable to other structures of an electrode assembly other than the electrodes, such as a separator.

### Examples and Comparative Examples

### Example 1

### (1) Manufacturing of Electrode Coating Composition

40g of deionized water serving as a solvent, 10g of boehmite (average particle size D50: 0.2 µm) serving as a flame retardant, and 0.1g of citric acid serving as a dispersant were roughly mixed and then mixed for 10 minutes using the Homo mixer (available from VMA under the product name, "Dispermat LC") .

### (2) Manufacturing of Lithium Secondary Battery

A negative electrode slurry was manufactured by mixing artificial graphite, carbon black, carboxymethyl cellulose (CMC), and styrene-butadiene rubber (SBR) at a weight ratio of 94.3:2.0:1.2:2.5 and adding distilled water. The negative el ectrode slurry was applied to one surface of a 10 µm thick copper (Cu) metal film and then dried in vacuum. Thereafter, the dried negative electrode slurry was roll-pressed, dried in a vacuum oven at 130°C for 12 hours, and punched to manufacture a negative electrode active material layer. A negative electrode with a 12.4 µm thick coating layer formed thereon was manufactured by coating the electrode coating composition manufactured as described above on the negative electrode active material layer, and then drying the electrode coating composition in vacuum.

Li[Ni0.83Co0.11Mn0.06]O2 as a positive electrode active material, carbon nanotubes (CNT), polyvinylidene fluoride (PVdF), and hydrogenated nitrile-based butadiene rubber (H-NBR) were put into an N-methylpyrrolidone (NMP) solvent at a weight ratio of 97.0:1.0:1.5:0.5, and stirred to manufacture a positive electrode slurry. The positive electrode slurry was applied to one surface of a 15 µm thick aluminum thin film and then dried at 130°C for 10 hours in vacuum. The dried positive electrode slurry was roll-pressed, dried in a vacuum oven at 130°C for 12 hours, and punched to manufacture a positive electrode.

An electrode assembly was manufactured by assembling the negative electrode and the positive electrode manufactured as described above and a 10 µm thick porous polyethylene separator using a stacking method.

An electrolyte was manufactured by dissolving LiPF6 in a solvent in which ethylene carbonate (EC) and ethylmethyl carbonate (EMC) were mixed at a weight ratio of 20:80.to 1.2M.

A lithium secondary battery was manufactured by accommodating the electrode assembly in a pouch-type battery case, injecting the electrolyte, and then sealing the battery case.

### Example 2

An electrode coating composition was manufactured in the same manner as in Example 1, except that 0.5g of citric acid was mixed instead of 0.1g citric acid in the electrode coating composition of Example 1.

A lithium secondary battery was manufactured in the same manner as Example 1, except that the electrode coating composition was used.

### Example 3

An electrode coating composition was manufactured in the same manner as in Example 1, except that 1.0g of citric acid was mixed instead of 0.1g citric acid in the electrode coating composition of Example 1.

A lithium secondary battery was manufactured in the same manner as Example 1, except that the electrode coating composition was used.

### Example 4

An electrode coating composition was manufactured in the same manner as in Example 1, except that 2.0g of citric acid was mixed instead of 0.1g citric acid in the electrode coating composition of Example 1.

A lithium secondary battery was manufactured in the same manner as Example 1, except that the electrode coating composition was used.

### Example 5

An electrode coating composition was manufactured in the same manner as in Example 1, except that 4.0g of citric acid was mixed instead of 0.1g citric acid in the electrode coating composition of Example 1.

A lithium secondary battery was manufactured in the same manner as Example 1, except that the electrode coating composition was used.

### Example 6

An electrode coating composition was manufactured in the same manner as in Example 1, except that 0.1 g of ethylenediamine was additionally mixed as a basic additive in the electrode coating composition of Example 1.

A lithium secondary battery was manufactured in the same manner as Example 1, except that the electrode coating composition was used.

### Example 7

In manufacturing an electrode coating composition, 40g of deionized water as a solvent, 10g of aluminum hydroxide (average particle size D50: 0.6 µm) and 3g of melamine (average particle size D50: 1 µm) as a flame retardant, 0.3g of citric acid as a dispersant, and 0.3g of ethylenediamine as a basic additive were roughly mixed and then mixed for 10 minutes using the Homo mixer (available from VMA under the product name, "Dispermat LC") .

### Comparative Example 1

A lithium secondary battery was manufactured in the same manner as Example 1, except that a coating layer was not formed on the negative electrode of the lithium secondary battery.

### Comparative Example 2

An electrode coating composition was manufactured in the same manner as in Example 1, except that citric acid was not mixed as a dispersant in manufacturing the electrode coating composition.

A lithium secondary battery was manufactured in the same manner as Example 1, except that the electrode coating composition was used.

### Comparative Example 3

An electrode coating composition was manufactured in the same manner as in Example 1, except that silicon monoxide (SiO), which is not a flame retardant, was used instead of boehmite.

A lithium secondary battery was manufactured in the same manner as Example 1, except that the electrode coating composition was used.

**[Table 1]**

| | Inorganic particles | | Citric acid | DI Water | Ethylene diamine |
|---|---|---|---|---|---|
| | Type | Content | Content | Content | Content |
| Example 1 | Boehmite | 10g | 0.1g | 40g | - |
| | | 19.96wt% | 0.20wt% | 79.84wt% | |
| Example 2 | Boehmite | 10g | 0.5g | 40g | - |
| | | 19.8wt% | 0.99wt% | 79.21wt% | |
| Example 3 | Boehmite | 10g | 1.0g | 40g | - |
| | | 19.61wt% | 1.96wt% | 78.43wt% | |
| Example 4 | Boehmite | 10g | 2.0g | 40g | - |
| | | 19.23wt% | 3.85wt% | 76.92wt% | |
| Example 5 | Boehmite | 10g | 4.0g | 40g | - |
| | | 18.52wt% | 7.41wt% | 74.07wt% | |
| Example 6 | Boehmite | 10g | 0.1g | 40g | 0.1g |
| | | 19.92wt% | 0.20wt% | 79.68wt% | 0.20wt% |
| Example 7 | Aluminum hydroxid e | 10g | 0.3g | 40g | 0.3g |
| | | 8.00wt% | | | |
| | Melamine | 3g | 0.33wt% | 89.34wt% | 0.33wt% |
| | | 2.00wt% | | | |
| Comparative Example 1 | - | - | - | - | - |
| Comparative Example 2 | Boehmite | 10g | - | 40g | - |
| | | 20wt% | | 80wt% | |
| Comparative Example 3 | SiO | 20g | 2g | 40g | - |
| | | 32.3 wt% | 3.2 wt% | 64.5 wt% | |

### Experimental Example 1: Measurement of Viscosity of Electrode Coating Composition

The viscosity of each of the electrode coating compositions manufactured in Examples 1 to 7 and Comparative Examples 2 to 3 was measured, and the measurement results are shown in Table 2 below.

The viscosity of the composition was measured using a viscometer (available from Brookfield under the product name, "DV2T") at the conditions of 25°C and 12 rpm.

### Experimental Example 2: Evaluation of Dispersibility of Inorganic Particles in Electrode Coating Composition

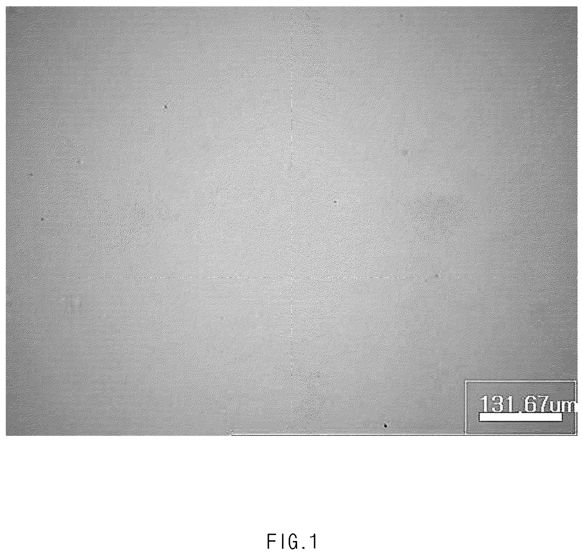

After applying each of the electrode coating compositions manufactured in Examples 1 to 7 and Comparative Examples 2 to 3 on a glass slide, the degree of dispersion of the inorganic particles in the composition was evaluated using an optical microscope as follows. The dispersibility evaluation results are shown in Table 2 below and FIGS. 1 to 9.
O: good dispersibility (no agglomeration occurs among inorganic particles)
X: poor dispersibility (agglomeration occurs among inorganic particles)

FIG. 1 is an optical microscope image taken at 300x magnification after applying an electrode coating composition manufactured in Example 1 to a glass slide.

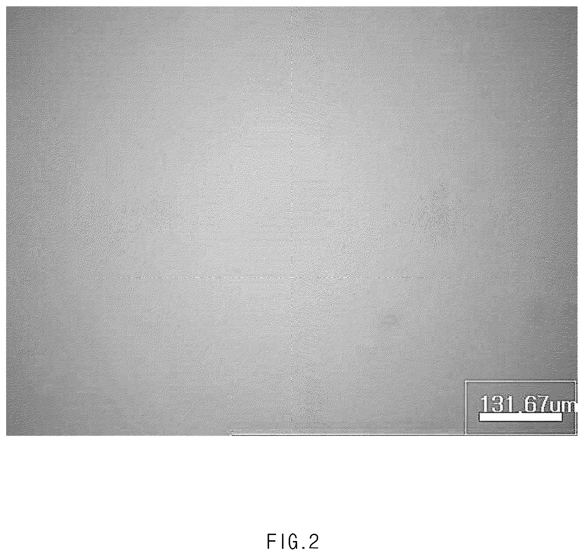

FIG. 2 is an optical microscope image taken at 300x magnification after applying an electrode coating composition manufactured in Example 2 to a glass slide.

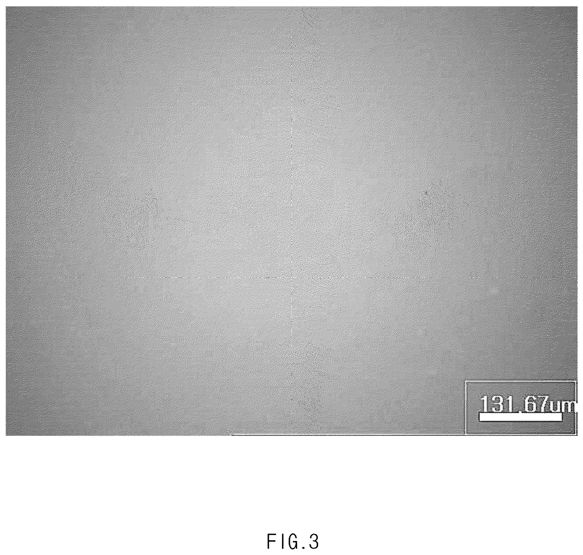

FIG. 3 is an optical microscope image taken at 300x magnification after applying an electrode coating composition manufactured in Example 3 to a glass slide.

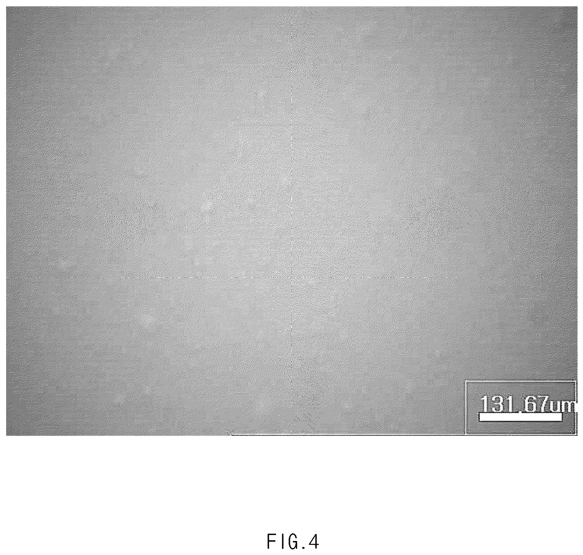

FIG. 4 is an optical microscope image taken at 300x magnification after applying an electrode coating composition manufactured in Example 4 to a glass slide.

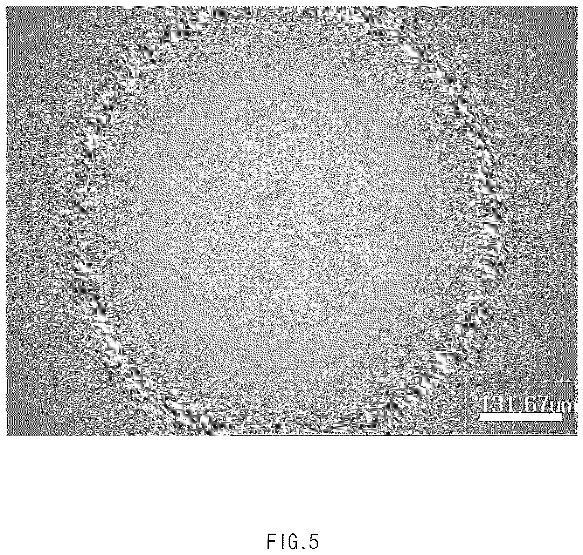

FIG. 5 is an optical microscope image taken at 300x magnification after applying an electrode coating composition manufactured in Example 5 to a glass slide.

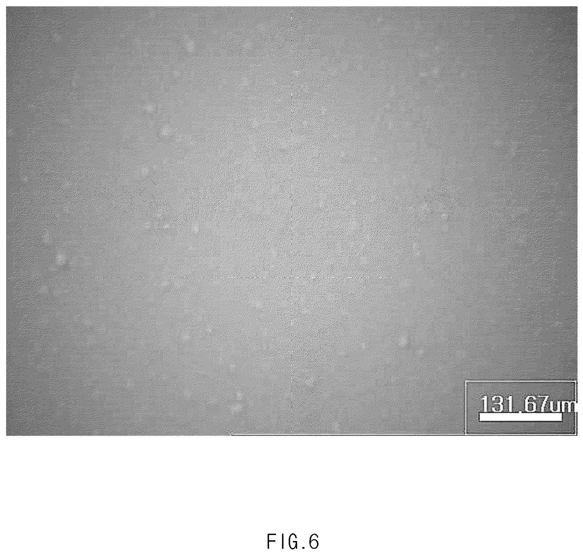

FIG. 6 is an optical microscope image taken at 300x magnification after applying an electrode coating composition manufactured in Example 6 to a glass slide.

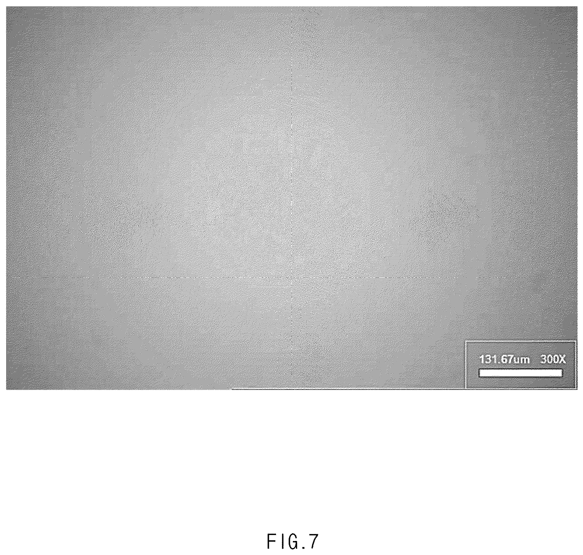

FIG. 7 is an optical microscope image taken at 300x magnification after applying an electrode coating composition manufactured in Example 7 to a glass slide.

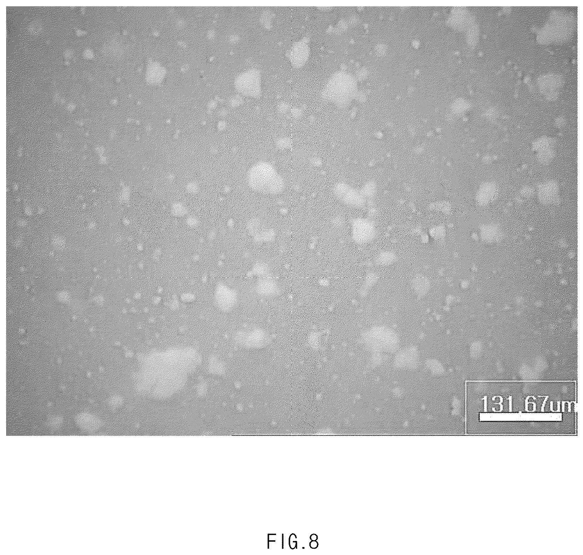

FIG. 8 is an optical microscope image taken at 300x magnification after applying an electrode coating composition manufactured in Comparative Example 2 to a glass slide.

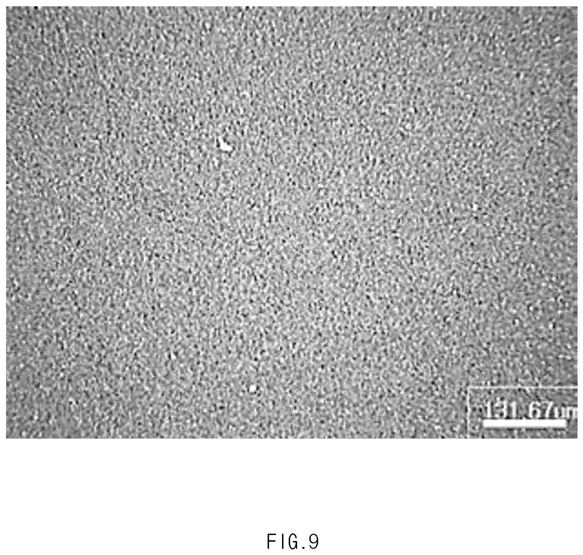

FIG. 9 is an optical microscope image taken at 300x magnification after applying an electrode coating composition manufactured in Comparative Example 3 to a glass slide.

**[Table 2]**

| | Electrode coating composition | |
|---|---|---|
| | Viscosity (cP) | Dispersibility of inorganic particles |
| Example 1 | 3,510 | O |
| Example 2 | 660 | O |
| Example 3 | 180 | O |
| Example 4 | 90 | O |
| Example 5 | 15,540 | O |
| Example 6 | 7,560 | O |
| Example 7 | 6,000 | O |
| Comparative Example 2 | 3,780 | X |
| Comparative Example 3 | 6,000 | O |

### Experimental Example 3: Evaluation of Heat Resistance Characteristic of Secondary Batteries

A hot box experiment was performed on each of the lithium secondary batteries manufactured in Examples 3 and 7 and Comparative Examples 1 and 3 in a fully charged state at SOC 100% (4.45V) while changing the temperature under the following conditions.
1) The temperature was raised from 25°C to 130°C at a rate of 5°C/min, and then the temperature was maintained for 30 minutes.
2) The temperature was raised from 130°C to 200°C at a rate of 2°C/min, and then the temperature was maintained for 30 minutes.
3) The temperature was raised from 200°C to 260°C at a rate of 2°C/min, and then the temperature was maintained for 30 minutes.

At this time, the rapid temperature increase start temperature and maximum temperature of each of the secondary batteries were measured using a thermocouple attached to the center of the pouch of the lithium secondary battery. In addition, in the hot box experiment, it was confirmed whether the secondary battery was ignited. The results are shown in Table 3 below.
- O: lithium secondary battery was ignited
- X: Lithium secondary battery was not ignited

**[Table 3]**

| | Secondary battery hot box experiment | | |
|---|---|---|---|
| | Rapid temperature increase start temperature (°C) | Maximum temperature (°C) | Ignition state |
| Example 3 | 208 | 486.1 | X |
| Example 7 | 191 | 511.3 | X |
| Comparative Example 1 | 172 | 517.5 | O |
| Comparative Example 3 | 181 | 531.3 | O |

### Experimental Example 4: Room Temperature Life Performance Evaluation of Secondary Batteries

Each of the lithium secondary batteries manufactured in Example 3 and Comparative Example 1 was charged/discharged at a temperature of 25°C according to the following conditions, the capacity (unit: Ah) of the battery according to the number of cycles was measured, and a capacity retention rate (%) was calculated.
- Charging conditions: charged at a rate of 0.2C in CC (constant current)/CV (constant voltage) mode, and cut off at 4.25V and 0.05C
- Discharging conditions: discharged at a rate of 0.2C in CC mode, and cut off at 3.0V

At this time, the battery capacity and the capacity retention rate at 100 cycles were measured using IL-2C-525S available from JEIO TECH Co., Ltd. The measurement results are shown in FIG. 9 and Table 4.

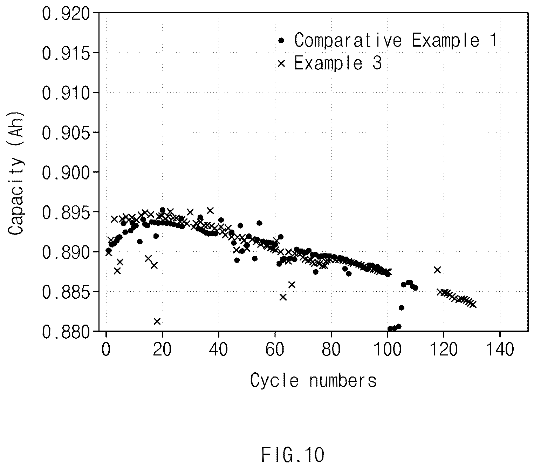

FIG. 10 is a graph showing battery capacity values depending on the number of cycles after operating lithium secondary batteries, which were manufactured in Example 3 and Comparative Example 1, respectively, at a temperature of 25°C.

**[Table 4]**

| | Capacity retention rate of secondary battery at 100 cycles (%) |
|---|---|
| Example 3 | 99.74376 |
| Comparative Example 1 | 99.66858 |

As shown in Tables 1 and 2, and FIGS. 1 to 9, when the electrode coating compositions of Examples 1 to 6 of the present disclosure in which boehmite and a compound containing one or more carboxyl groups were mixed in an aqueous solvent, it can be seen that the dispersibility of boehmite is good and agglomeration among particles hardly occurs.

In the electrode coating composition of Example 7, a flame retardant containing aluminum hydroxide and melamine and a compound containing at least one carboxyl group were mixed in an aqueous solvent. The aluminum hydroxide exhibits high endothermic energy but may exhibit an explosive reaction with lithium due to the production of excessive water, whereas the melamine has a higher endothermic effect than boehmite as an inorganic flame retardant described above. Therefore, it may be predicted that using a melamine-only flame retardant will exhibit the best flame retardant effect. However, the inorganic flame retardant helps to properly implement an insulation effect in the event of an internal short circuit through surface coating, and it is difficult to manufacture a melamine-only slurry. Therefore, it is preferable to use a mixed flame retardant as in Example 7 above.

In the meantime, in the case of the electrode coating composition of Comparative Example 2 which does not contain a compound containing one or more carboxyl grounds in the aqueous solvent of the present disclosure and to which the present disclosure is not applied, it can be seen that boehmite is not properly dispersed, resulting in agglomeration among particles and particle shapes with a diameter of about 50 µm. In addition, in the case of the electrode coating composition of Comparative Example 3 as well in which silicon monoxide (SiO) to which the present disclosure is not applied is instead of boehmite, it can be seen that agglomeration among particles occurred since the silicon monoxide (SiO) is not sufficiently dispersed.

As shown in Tables 1 and 3, in the case of Comparative Example 1 in which no coating layer to which the present disclosure was not applied was formed on the negative electrode and Comparative Example 3 in which silicon monoxide (SiO) was included in the coating layer instead of boehmite, it can be seen that the rapid temperature increase start temperatures of the secondary batteries are significantly lower than those in Examples 3 and 7, the maximum temperatures of the secondary batteries are significantly higher than those in Examples 3 and 7, and the secondary batteries are ignited in the hot box experiment unlike those in Examples 3 and 7.

As shown in Tables 1 and 4 and FIG. 10, in the case of Example 3 in which a coating layer was formed from a composition obtained by mixing boehmite and a compound containing one or more carboxyl groups in an aqueous solvent in the electrode coating composition of the present disclosure, it can be seen that the capacity retention rate (%) at room temperature is relatively more excellent than that in Comparative Example 1 to which the present disclosure was not applied.

While the present disclosure has been described with reference to embodiments thereof in the foregoing detailed description, a person ordinarily skilled in the art may clearly understand that the present disclosure can be variously modified and changed without departing from the spirit and scope of the present disclosure defined in the accompanying claims. Therefore, the technical scope of the present disclosure shall not be limited to the content described in the detailed description of the specification, but shall be determined on the basis of the claims.

## Claims

1. A coating composition for a secondary battery, the coating composition comprising:
a flame retardant;
a dispersant; and
an aqueous solvent,
wherein the flame retardant comprises at least one of an inorganic flame retardant containing a hydroxyl group, a phosphorus-based flame retardant, a halogen-based flame retardant, and a melamine-based flame retardant.

2. The coating composition of claim 1, wherein the inorganic flame retardant contains at least one selected from a group consisting of boehmite, pseudoboehmite, aluminum hydroxide, and magnesium hydroxide.

3. The coating composition of claim 1, wherein the inorganic flame retardant has an average particle size D50 ranging from about 0.1 µm to 5.0 µm.

4. The coating composition of claim 1, wherein the dispersant contains a compound containing one or more carboxyl groups.

5. The coating composition of claim 1, wherein the dispersant contains one or more selected from a group consisting of citric acid, malic acid, oxalic acid, glutamic acid, aspartic acid, amino acid, malonic acid, and fatty acid.

6. The coating composition of claim 1, wherein the dispersant and the flame retardant are contained in a weight ratio of about 1:2 to 1:150.

7. The coating composition of claim 1, wherein the aqueous solvent is water.

8. The coating composition of claim 1, wherein the coating composition has solids content of about 10% to 70% by weight.

9. The coating composition of claim 1, further comprising:
a basic additive.

10. The coating composition of claim 9, wherein the basic additive contains at least one selected from the group consisting of lithium carbonate, sodium carbonate, potassium carbonate, magnesium carbonate, calcium carbonate, ethylenediamine, diethylenetriamine, tris(2-aminoethyl)amine, vinylene carbonate, vinyl ethylene carbonate, fluoroethylene carbonate, methyl propargyl carbonate, and allyl methyl carbonate.

11. The coating composition of claim 9, wherein the basic additive is contained in an amount of about 1 to 10 parts by weight based on 100 parts by weight of the coating composition.

12. A secondary battery electrode comprising:
a current collector;
an electrode active material layer; and
a coating layer,
wherein the electrode active material layer and the coating layer are disposed on the current collector, and
the coating layer is formed by the coating composition of claim 1.

13. The secondary battery electrode of claim 12, wherein the coating layer has a thickness ranging from about 2 µm to 30 µm.

14. A lithium secondary battery comprising the secondary bat tery electrode of claim 12.

15. A sodium secondary battery comprising the secondary batt ery electrode of claim 12.

16. A secondary battery separator comprising:
a porous polymer substrate; and
a coating layer,
wherein the coating layer is disposed on one surface of the porous polymer substrate, and
the coating layer is formed by the coating composition of claim 1.

17. A method of manufacturing a coating composition for a secondary battery, wherein the coating composition comprises a flame retardant, a dispersant, and an aqueous solvent, and
wherein the flame retardant includes at least one of an inorganic flame retardant containing a hydroxyl group, a phosphorus-based flame retardant, a halogen-based flame retardant, and a melamine-based flame retardant.

18. The method of claim 17, wherein the inorganic flame retardant contains at least one selected from a group consisting of boehmite, pseudoboehmite, aluminum hydroxide, and magnesium hydroxide.

19. The method of claim 17, wherein the inorganic flame retardant has an average particle size D50 ranging from about 0.1 µm to 5.0 µm.

20. The method of claim 17, wherein the dispersant comprises a compound containing one or more carboxyl groups.
